# EUROPÄISCHE PATENTSCHRIFT

(11) **EP 0 384 222 B1**
(45) Veröffentlichungstag und Bekanntmachung des Hinweises auf die Patenterteilung: **15.12.1993**
(21) Anmeldenummer: 90102421.6
(22) Anmeldetag: 07.02.1990
(51) Int. Cl.: B60L 9/30

(54) **Einspeiseschaltung für eine Mehrsystemlokomotive**
Supply circuit for a multisystem locomotive
Circuit d'alimentation pour une locomotive à systèmes multiples

(30) Priorität: 22.02.1989 EP 89103111
(43) Veröffentlichungstag der Anmeldung: 29.08.1990
(73) Patentinhaber: SIEMENS AKTIENGESELLSCHAFT, 80333 München (DE)
(72) Erfinder: Fuchs, Andreas, Dr., D-8520 Erlangen (DE)

(56) Entgegenhaltungen:
- EP-A- 0 204 690
- EP-A- 0 330 055
- ELEKTRISCHE BAHNEN. vol. 85, no. 11, November 1987, MÜNCHEN DE Seiten 367 - 372; G. PROKISCH: "DIE ZWEIFREQUENZLOKOMOTIVE Rh 1146 DER OESTERREICHISCHEN BUNDESBAHNEN IN DREHSTROMANTRIEBSTECHNIK"
- ELEKTRISCHE BAHNEN. vol. 86, no. 1, Januar 1988, MÜNCHEN DE Seiten 22 - 39; H. GATHMANN ET AL: "UEBERSICHT UEBER DIE JUENGSTEN ENTWICKLUNGEN DER DREHSTROMANTRIEBSTECHNIK BEI ELEKTRISCHEN BAHNEN"

## Beschreibung

Die Erfindung bezieht sich auf eine Einspeiseschaltung für eine Mehrsystemlokomotive, wobei die Einspeiseschaltung einen Transformator und einen ersten und zweiten Stromrichter enthält, die jeweils mittels eines ersten und zweiten Zwischenkreiskondensators mit einem ersten und zweiten Wechselrichter elektrisch leitend verbunden sind.

Mehrsystemlokomotiven sind für Gleichspannungs- und Wechselspannungsbetrieb ausgelegt. Im Gleichspannungsbetrieb werden die Zwischenkreiskondensatoren jeweils über einen Schalter oder eine Reihenschaltung aus wenigstens zwei Zwischenkreiskondensatoren mit einem Gleichspannungsnetz verbunden. Im Wechselspannungsbetrieb wird die Primärwicklung des Traktionstransformators mit einem Wechselspannungsnetz 15 kV 16 2/3 Hz bzw. 25 kV 50 Hz verbunden, dessen Sekundärwicklungen jeweils über Wechselstromanschlüsse eines Stellgliedes mit einem Stellglied, auch Vierquadrantensteller 4 q-S genannt, verbunden sind. Mittels der Steller kann an jedem Zwischenkreiskondensator eine vorbestimmte Zwischenkreisspannung eingestellt werden, unabhängig von der Eingangswechselspannung des Wechselspannungsnetzes. Beim Gleichspannungsbetrieb ist das Gleichspannungsnetz in Abhängigkeit der Netzspannung entweder jeweils mit einem Zwischenkreiskondensator oder mit einer Reihenschaltung wenigstens zweier Zwischenkreiskondensatoren verbunden. Deshalb wirken sich Netzspannungsschwankungen auch voll auf die Zwischenkreisspannung aus. Dadurch wird der jeweilige nachgeschaltete Wechselrichter nicht aus einem starren Zwischenkreis versorgt, wodurch Einbußen in der Zugkraft im Feldschwächbereich, verursacht durch Netzspannungseinbrüche, in Kauf genommen werden müssen.

Aus der EP 0 204 690 A1 ist eine Einspeiseschaltung für den universellen Betrieb elektrischer Triebfahrzeuge an Wechsel- oder Gleichspannungssystemen bekannt. Diese Einspeiseschaltung ist dadurch gekennzeichnet, daß bei Wechselspannungssystemen ein einem Einphasen-Netztransformator nachgeschalteter Vierquadranten-Netzstromrichter und bei Gleichspannungssystemen eine einem Eingangs-Netzfilter nachgeschaltete Gleichstromsteller-Glättungsdrossel-Einheit auf den Zwischenkreiskondensator eines Spannungszwischenkreis-Umrichters einspeist. Die Sekundärwicklung des Einphasen-Netztransformators wird im Gleichspannungsbetrieb nach Kurzschließen der Primärwicklung als Glättungsdrossel zwischen dem Gleichstromsteller und einem positiven Pol des Zwischenkreiskondensators verwendet. Außerdem wird im Gleichspannungsbetrieb ein Halbpol des Vierquadranten-Netzstromrichters als Gleichstromsteller verwendet, wobei der positive Pol dieses Halbpoles vom positiven Pol des Zwischenkreiskondensators getrennt und an den positiven Pol des Kondensators des Eingangs-Netzfilters und der negative Pol des Halbpoles an Masse geschaltet wird. Bei dieser Einspeiseschaltung müssen bei Wechsel von Wechsel- zu Gleichspannungssystemen und umgekehrt eine Anzahl von Schützen betätigt werden. Außerdem müssen die Stromrichterventile des Halbpoles des Vierquadranten-Netzstromrichters auf maximale Eingangsspannung (Fahrdrahtspannung) ausgelegt werden.

Der Erfindung liegt nun die Aufgabe zugrunde, eine Einspeiseschaltung für eine Mehrsystemlokomotive anzugeben, wodurch auch bei Gleichspannungsversorgung am Zwischenkreis eine geregelte Zwischenkreisspannung unabhängig von der Eingangsgleichspannung ansteht.

Diese Aufgabe wird erfindungsgemäß durch die kennzeichnenden Merkmale des Anspruchs 1 gelöst.

Durch die Verbindung des ersten Brückenzweiges des ersten Stromrichters mit dem ersten Brückenzweig des zweiten Stromrichters und des zweiten Brückenzweiges des ersten Stromrichters mit dem zweiten Brückenzweig des zweiten Stromrichters jeweils mittels einer Sekundärwicklung des Transformators, kann man in Abhängigkeit der Eingangsspannung bezogen auf die Zwischenkreisssollspannung und der daraus resultierenden Steuerspannung die beiden Zwischenkreiskondensatoren parallel oder in Reihe schalten. Durch pulsbreitenmodulierte Steuerspannungen für die Stromrichterventile des zweiten Brückenzweiges des ersten Stromrichters und des ersten Brückenzweiges des zweiten Stromrichters kann man die Zwischenkreisspannung auch bei einer Gleichspannungsversorgung auf eine vorbestimmte Zwischenkreis-Sollspannung regeln. Somit erhält man am Zwischenkreis immer eine auf eine Sollspannung geregelte Zwischenkreisspannung unabhängig von der Netzspannung eines speisenden Gleichspannungsnetzes.

In einer vorteilhaften Ausgestaltung der Einspeiseschaltung weist jede Sekundärwicklung des Transfomators eine große Streuung auf und bei Gleichspannungseinspeisung ist die Primärwicklung überbrückbar. Dadurch kann man ohne zusätzlichen Bauteileaufwand die Einspeiseschaltung bei einer Gleichspannungseinspeisung und bei einer Wechselspannungseinspeisung verwenden, da bei Gleichspannungsbetrieb jeweils die große Streuinduktivität als Verbindungsinduktivität wirksam wird und bei Wechselspannungseinspeisung durch Parallelschalten der beiden Stromrichter zwei parallel geschaltete Stellglieder bzw. Vierquadrantensteller entstehen, die auf eine gemeinsame Stromschiene speisen. Somit erhält man ohne eine große Anzahl von Schützen und Schaltern eine Einspeiseschaltung, die am Zwischenkreiskondensator eine geregelte Kondensatorspannung erzeugt, unabhängig von der Netzspannungsversorgung und unabhängig von der Netzspannung.

Zur weiteren Erläuterung der Erfindung wird auf die Zeichnung Bezug genommen, in der Ausführungsbeispiele nach der Erfindung schematisch veranschaulicht sind.
- Figur 1: zeigt einen Traktionsantrieb für eine Mehrsystemlokomotive mit der erfindungsgemäßen Speiseschaltung, in
- Figur 2: ist eine erzeugte Schaltungsvariante der Einspeiseschaltung dargestellt,
- Figur 3: veranschaulicht eine weitere Erfindungsvariante der Einspeiseschaltung, in
- Figur 4: sind der Eingangsstrom und die Stellerströme der Einspeiseschaltung in einem Diagramm über dem Lastverteilfaktor k dargestellt, in
- Figur 5: sind der Eingangsstrom und die Stellerströme der Einspeiseschaltung im Bremsbetrieb in einem Diagramm über dem Laststrom aufgetragen und die
- Figur 6: zeigt eine weitere Ausführungsform der Einspeiseschaltung für drei Antriebe.

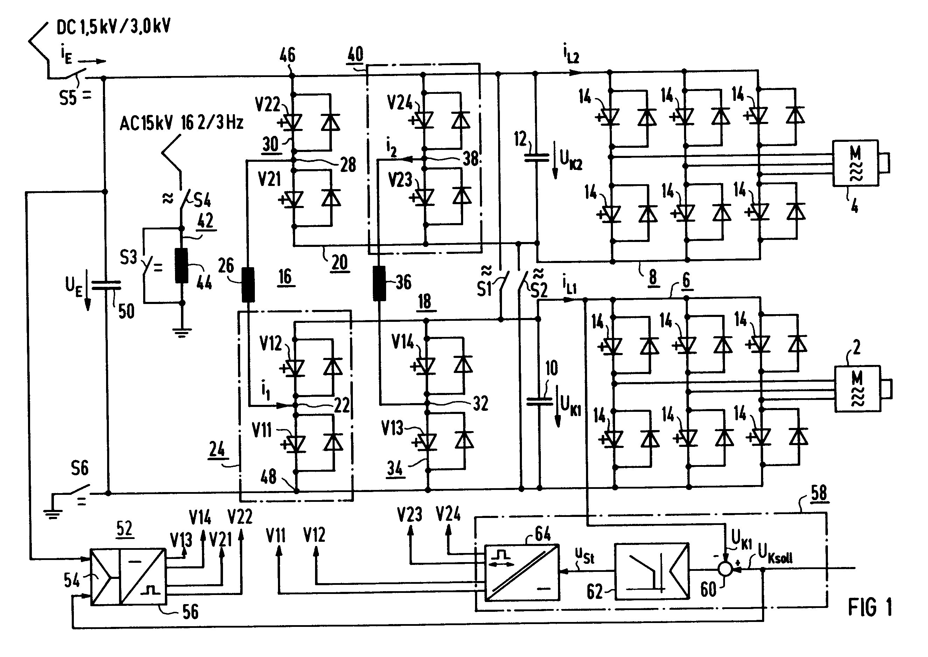

In Figur 1 ist ein Traktionsantrieb mit zwei Drehstrommotoren 2 und 4 für eine Mehrsystemlokomotive dargestellt. Der Drehstrommotor 2 bzw. 4 wird mittels eines Wechselrichters 6 bzw. 8 aus einem Zwischenkreiskondensator 10 bzw. 12 versorgt. Als Stromrichterventile 14 der beiden Wechselrichter 6 und 8 können Thyristoren, Transistoren und GTO-Thyristoren (Gate Turn Off) verwendet werden, wobei in dieser Darstellung GTO-Thyristoren vorgesehen sind. Die beiden Zwischenkreiskondensatoren 10 und 12 sind eingangsseitig mit einer Einspeiseschaltung 16 verknüpft.

Die Einspeiseschaltung 16 besteht aus einem ersten und zweiten selbstgeführten vierpulsigen Stromrichter 18 und 20. Der wechselstromseitige Eingang 22 eines ersten Brückenzweiges 24 des ersten Stromrichters 18 ist über eine Induktivität 26 mit einem wechselstromseitigen Eingang 28 eines ersten Brückenzweiges 30 des zweiten Stromrichters 20 verknüpft. Ein Wechselstromseitiger Eingang 32 eines zweiten Brückenzweiges 34 des ersten Stromrichters 18 ist ebenfalls über eine Induktivität 36 mit einem wechselstromseitigen Eingang 38 eines zweiten Brückenzweiges 40 des zweiten Stromrichters 20 verbunden. Als Stromrichterventile V11 bis V14 des ersten Stromrichters 18 sind GTO-Thyristoren vorgesehen, die jeweils mit einer antiparallelen Diode versehen sind. Auch die Stromrichterventile V21 bis V24 des zweiten Stromrichters 20 sind GTO-Thyristoren, die ebenfalls jeweils mit einer antiparallelen Diode versehen sind. Die beiden Stromrichter 18 und 20 sind bei Wechselspannungsversorgung mittels der Schalter S1 und S2 parallel schaltbar. Als Induktivität 26 bzw. 36 ist eine Sekundärwicklung eines Transformators 42, mit großer Streuinduktivität, auch Traktionstransformator genannt, vorgesehen. Die Primärwicklung 44 dieses Transformators 42 ist bei Gleichspannungsversorgung mittels eines Schalters S3 überbrückbar. Außerdem ist die Primärwicklung 44 über einen Schalter S4 und einem Stromabnehmer mit einem Wechselspannungsnetz verbindbar. Als Wechselspannungsnetz kann beispielsweise ein 15 kV 16 2/3 Hz- bzw. ein 25 kV 50 Hz-Netz vorgesehen sein. Ein positiver gleichstromseitiger Anschluß 46 des zweiten Stromrichters 20 ist über einen Schalter S5 und einen Stromabnehmer mit einem Gleichspannungsnetz verbindbar, wobei als Gleichspannungsnetz ein 1,5 kV- bzw. ein 3,0 kV-Netz vorgesehen sein kann. Ein negativer gleichstromseitiger Anschluß 48 des ersten Stromrichters 18 ist über einen Schalter S6 mit dem Erdpotential verbindbar. Zu diesen gleichstromseitigen Anschlüssen 46 und 48 ist ein Stützkondensator 50 elektrisch parallel geschaltet.

Eine Steuerschaltung 52, der eine Eingangsgleichspannung U_{E} und eine Zwischenkreis-Sollspannung U_{Ksoll} zugeführt ist, erzeugt in Abhängigkeit der Eingangsgleichspannung U_{E} bezogen auf die Zwischenkreis-Sollspannung U_{Ksoll} Steuersignale für die Stromrichterventile V13 und V14 des ersten Stromrichters 18 und für die Stromrichterventile V21 und V22 des zweiten Stromrichters 20. Eingangsseitig weist dieses Steuerschaltung 52 einen Komparator 54 auf, dessen Ausgang mit einem Steuersatz 56 verknüpft ist. Dieser Steuersatz 56 erzeugt in Abhängigkeit der Polarität des Ausgangssignals des Komparators 54 Steuersignale für die Stromrichterventile V14 und V21 oder für die Stromrichterventile V13 und V22. Als Steuersignale stehen an den Ausgängen des Steuersatzes 56 Dauersignale an.

Die Stromrichterventile V11 und V12 des ersten Stromrichters 18 und die Stromrichterventile V23 und V24 des zweiten Stromrichters 20 erhalten pulsbreitenmodulierte Steuersignale von einer weiteren Steuerschaltung 58. Diese Steuerschaltung 58 enthält eingangsseitig einen Differenzbildner 60, dem ein Spannungsregler 62 nachgeschaltet ist. Der Ausgang dieses Spannungsreglers 62 ist mit einem Steuersatz 64 verknüpft, der aus der vom Spannungsregler 62 erzeugten Steuerspannung u_{St} pulsbreitenmodulierte Steuersignale für die Stromrichterventile V11, V12, V23 und V24 der Stromrichter 18 und 20 bildet. Die Steuerspannung u_{St} wird mittels des Differenzbildners 60 der die Differenzspannung zwischen der Zwischenkreis-Istspannung U_{K1} eines Zwischenkreises und einer vorbestimmten Zwischenkreis-Sollspannung U_{Ksoll} ermittelt, gebildet und dem Spannungsregler 62 zugeführt.

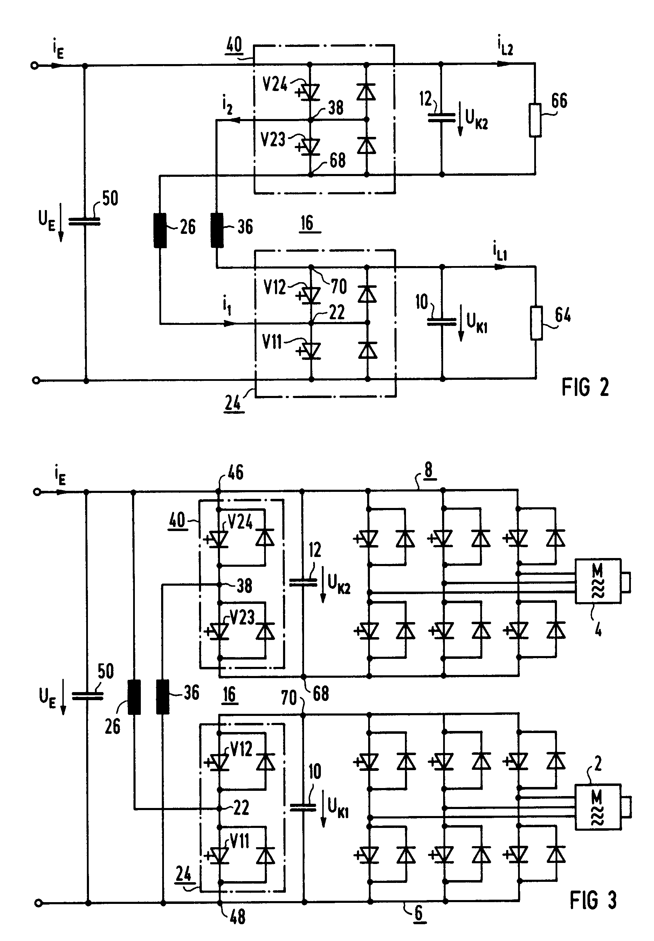

Die Figur 2 zeigt eine erzeugte Schaltungsvariante der Einspeiseschaltung 16, wobei der erste und zweite Wechselrichter 6 und 8 mit nachgeschaltetem Drehstrommotor 2 und 4 jeweils als Widerstand 64 und 66 dargestellt sind, der jeweils elektrisch parallel zum Zwischenkreiskondensator 10 und 12 geschaltet ist. Diese Schaltungsvariante entsteht aus der Einspeisung 16 nach Figur 1, wenn das Stromrichterventil V14 des zweiten Brückenzweiges 34 des ersten Stromrichters 18 und das Stromrichterventil V21 des ersten Brückenzweiges 30 des zweiten Stromrichters 20 durchgesteuert wird. Dadurch wird der wechselstromseitige Eingang 22 des ersten Brückenzweiges 24 des ersten Stromrichters 18, auch Steller 24 genannt, über die Induktivität 26 mit einem negativen gleichspannungsseitigen Anschluß 68 des zweiten Brückenzweiges 40 des zweiten Stromrichters 20 elektrisch leitend verbunden. Der wechselstromseitige Eingang 38 des zweiten Brückenzweiges 40 des zweiten Stromrichters 20, auch Steller 40 genannt, ist elektrisch leitend über die Induktivität 36 mit einem positiven gleichspannungsseitigen Anschluß 70 des ersten Brückenzweiges 24 des ersten Stromrichters 18 verbunden. Somit ist aus der Einspeiseschaltung 16 nach Figur 1 eine Einspeiseschaltung 16, bestehend aus zwei Aufwärtsstellern, durch Durchsteuern der Stromrichterventile V14 und V21 geworden. Solange die Eingangsgleichspannung U_{E} größer gleich der Zwischenkreis-Sollspannung U_{Ksoll} und kleiner gleich der doppelten Zwischenkreis-Sollspannung U_{Ksoll} ist, werden die Stromrichterventile V14 und V21 von der Steuerschaltung 52 angesteuert, wodurch diese Schaltungsvariante der Einspeiseschaltung 16 erhalten bleibt.

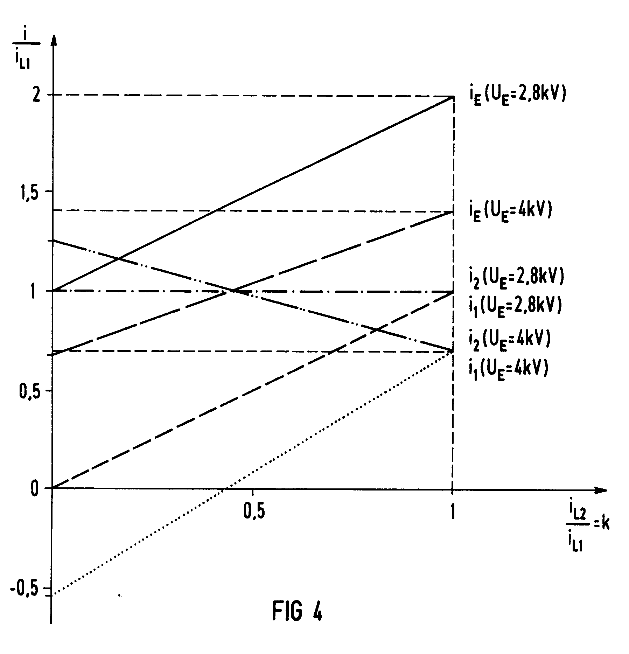

In Abhängigkeit der Zwischenkreis-Sollspannung U_{Ksoll} zur Zwischenkreis-Istspannung U_{K1} bzw. U_{K2} stellt sich jeweils eine Stelleraussteuerung a, die proportional zur Steuerspannung u_{St} des Spannungsreglers 62 ist, ein. Bei einer Eingangsgleichspannung U_{E} gleich der Zwischenkreis-Sollspannung U_{Ksoll} stellt sich eine Stelleraussteuerung a = 1 ein, so daß die Zwischenkreis-Istspannung U_{K1} bzw. U_{K2} gleich der Zwischenkreis-Sollspannung U_{Ksoll} ist. Die Stelleraussteuerung a = 1 bedeutet, daß das Stromrichterventil V11 des ersten Stellers 24 und das Stromrichterventil V24 des zweiten Stellers 40 durchgesteuert sind. Dadurch sind die Zwischenkreiskondensatoren 10 und 12 elektrisch parallel geschaltet. Wenn nun die Eingangsgleichspannung U_{E} gleich der doppelten Zwischenkreis-Sollspannung U_{Ksoll} ist, stellt sich eine Stelleraussteuerung a = 0 ein, so daß die Zwischenkreis-Istspannung U_{K1} bzw. U_{K2} gleich der Zwischenkreis-Sollspannung U_{Ksoll} ist. Die Stelleraussteuerung a = 0 bedeutet, daß das Stromrichterventil V12 des ersten Stellers 24 und das Stromrichterventil V23 des zweiten Stellers 40 durchgesteuert sind. Dadurch sind die Zwischenkreiskondensatoren 10 und 12 elektrisch in Reihe geschaltet. Für die Stelleraussteuerungen a, die größer Null und kleiner Eins sind, erzeugt die weitere Steuerschaltung 58 für die Stromrichterventile V11 und V12 des ersten Stellers 24 und für die Stromrichterventile V23 und V24 des zweiten Stellers 40 pulsbreitenmodulierte Steuersignale. In der Figur 4 sind der Eingangsstrom i_{E} und die Stellerströme i₁ und i₂ in Abhängigkeit eines Lastverteilfaktors k = i_{L2}/i_{L1} in einem Diagramm dargestellt. Dabei ist einmal für die Eingangsgleichspannung U_{E} der Wert der Zwischenkreis-Sollspannung U_{Ksoll} = 2,8 kV und einmal eine Überspannung der Eingangsgleichspannung mit einem Wert U_{E} = 4 kV angenommen worden. Außerdem ist eine unsymmetrische Lastverteilung, nämlich i_{L1} = konstant und i_{L2} variabel, angenommen worden. In Abhängigkeit der Stelleraussteuerung a > 0 ist jede beliebige Lastverteilung möglich.

Die Figur 3 zeigt eine weitere erzeugte Schaltungsvariante der Einspeiseschaltung 16 nach Figur 1. Diese Schaltungsvariante entsteht, wenn mittels der Steuerschaltung 52 das Stromrichterventil V13 des zweiten Brückenzweiges 34 des ersten Stromrichters 18 und das Stromrichterventil V22 des ersten Brückenzweiges 30 des zweiten Stromrichters 20 durchgeschaltet werden. Dadurch wird der wechselstromseitige Eingang 22 des ersten Brückenzweiges 24 des ersten Stromrichters 18 bzw. Stellers 24 über die Induktivität 26 mit dem positiven gleichspannungsseitigen Anschluß 46 des zweiten Stellers 40 und der wechselstromseitige Eingang 38 des zweiten Brückenzweiges 40 des zweiten Stromrichters 20 bzw. des zweiten Stellers 40 über die Induktivität 36 mit dem negativen gleichspannungsseitigen Anschluß 48 des ersten Stellers 24 elektrisch leitend verbunden. Die Stromrichterventile V13 und V22 werden genau dann von der Steuerschaltung 50 angesteuert, wenn die Eingangsgleichspannung U_{E} kleiner ist als die Zwischenkreis-Sollspannung U_{Ksoll}. Damit an den Zwischenkreiskondensatoren 10 und 12 jeweils eine auf die Zwischenkreis-Sollspannung U_{Ksoll} geregelte Zwischenkreis-Istspannung U_{K1} bzw. U_{K2} ansteht, werden das Stromrichterventil V12 des ersten Stellers 24 und das Stromrichterventil V23 des zweiten Stellers 40 durchgesteuert. Somit sind die Zwischenkreiskondensatoren 10 und 12 elektrisch parallel geschaltet. Bei sinkender Eingangsgleichspannung U_{E} werden die Stromrichterventile V11 und V12 des ersten Stellers 24 und die Stromrichterventile V23 und V24 des zweiten Stellers 40 derart mit pulsbreitenmodulierten Steuersignalen angesteuert, daß der Steller 24 und der Steller 40 in Verbindung mit den Induktivitäten 26 und 36 als Aufwärtssteller arbeiten, so daß an den gleichspannungsseitigen Anschlüssen 48 und 70 des ersten Stellers 24 und an den gleichspannungsseitigen Anschlüssen 68 und 46 des zweiten Stellers 40 jeweils eine auf die Zwischenkreis-Sollspannung U_{Ksoll} geregelte Zwischenkreis-Istspannung U_{K1} und U_{K2} ansteht.

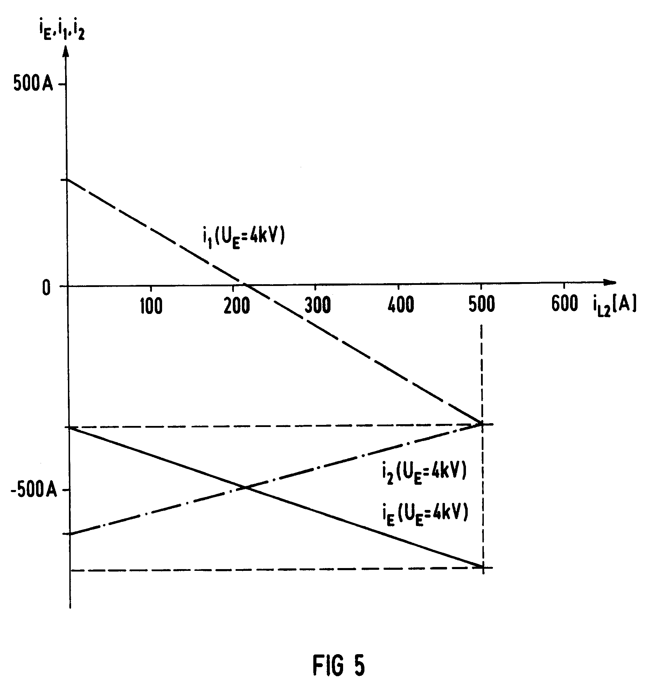

Mit der Einspeiseschaltung 16 nach Figur 1 bzw. der Schaltungsvarianten nach Figuren 2 und 3 ist auch eine Nutzbremsung möglich. In Figur 5 sind der Eingangsstrom i_{E} und die Stellerströme i₁ und i₂ in einem Diagramm über dem Laststrom i_{L2} aufgetragen, wobei ein Laststrom I_{L1} = -500 A und eine Zwischenkreisspannung U_{K1} = U_{K2} = 2,8 kV angenommen ist.

Somit erhält man mit der Einspeiseschaltung 16 nach Figur 1 einen Gleichspannungsstellbereich ohne Umschaltung von Eingangsgleichspannung U_{E} größer gleich Null bis Eingangsgleichspannung U_{E} kleiner gleich doppelter Wert der Zwischenkreis-Sollspannung U_{Ksoll}.

Bei Wechselspannungseinspeisung aus einem 15 kV 16 2/3 Hz- bzw. 15 kV 50 Hz-Netz werden die Schalter S3, S5 und S6 geöffnet und die Schalter S1, S2 und S4 geschlossen. Dadurch sind der erste Stromrichter 18 und der zweite Stromrichter 20 elektrisch parallel geschaltet, wobei die eine Sekundärwicklung 26 des Transformators 42 den wechselstromseitigen Eingang 22 des ersten Brückenzweiges 24 des ersten Stromrichters 18 mit dem wechselstromseitigen Eingang 28 des ersten Brückenzweiges 30 des zweiten Stromrichters 20 und die Sekundärwicklung 36 des Transformators 42 den wechselstromseitigen Eingang 32 des zweiten Brückenzweiges 34 des ersten Stromrichters 18 mit dem wechselstromseitigen Eingang 39 des zweiten Brückenzweiges 40 des zweiten Stromrichters 20 elektrisch leitend verbinden. Dadurch bilden bei Wechselspannungseinspeisung der erste Brückenzweig 24 des ersten Stromrichters 18 und der erste Brückenzweig 30 des zweiten Stromrichters 20 einen ersten Vierquadrantensteller und der zweite Brückenzweig 34 des ersten Stromrichters 18 und der zweite Brückenzweig 40 des zweiten Stromrichters 20 einen zweiten Vierquadrantensteller. Diese beiden Vierquadrantensteller speisen in eine gemeinsame Gleichspannungsschiene, an der die beiden Zwischenkreiskondensatoren 10 und 12 mit nachgeschalteten Wechselrichtern 6 und 8 elektrisch parallel angeschlossen sind.

Durch die Gestaltung der erfindungsgemäßen Einspeiseschaltung 16 für eine Mehrsystemlokomotive erhält man bei Gleichspannungseinspeisung und bei Wechselspannungseinspeisung immer eine geregelte Zwischenkreisspannung U_{K1} und U_{K2}.

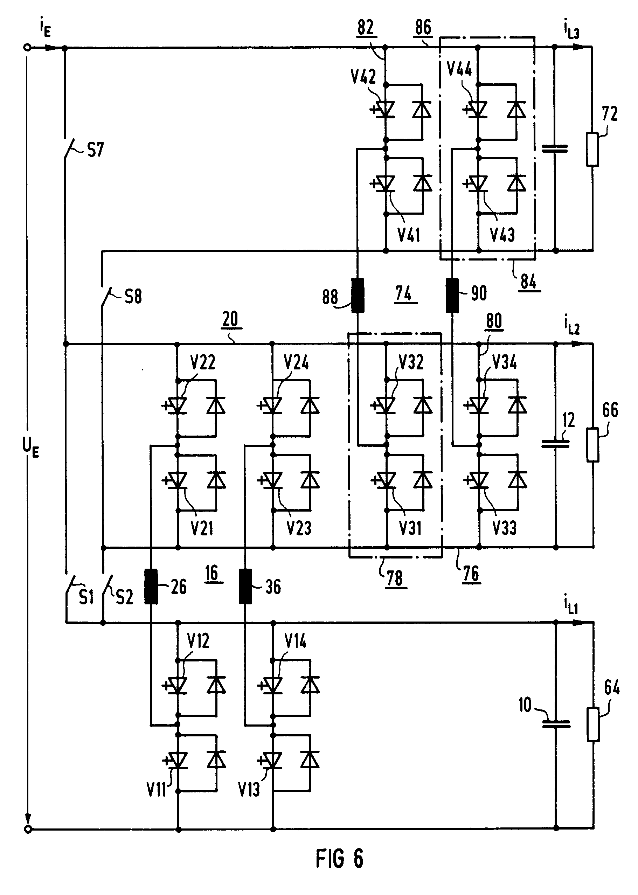

In Figur 6 ist ein Traktionsantrieb mit drei Wechselstrommotoren dargestellt, wobei jeweils der Wechselrichter mit nachgeschalteten Wechselstrommotor als Widerstand 64, 66 und 72 dargestellt ist. Der Traktionsantrieb gemäß Figur 1 ist somit um einen Antrieb erweitert worden. Deshalb sind gleiche Bauelemente der Figur 1 und der Figur 6 mit denselben Bezugszeichen versehen. Gegenüber der Ausführungsform nach Figur 1 ist eine zweite Einspeiseschaltung 74 vorgesehen, deren erster Stromrichter 76 elektrisch parallel zum zweiten Stromrichter 20 der Einspeiseschaltung 16 geschaltet ist. Der weitere Aufbau der Einspeiseschaltung 74 entspricht dem Aufbau der Einspeiseschaltung 16. Auch die Brückenzweige 78, 80, 82 und 84 der beiden Stromrichter 76 und 86 der Einspeiseschaltung 74 sind mittels Induktivitäten 88 und 90 untereinander verbunden. Mit Hilfe zweier weiterer Schalter S7 und S8 sind die Stromrichter 76 und 86 elektrisch parallel schaltbar, sobald eine Wechselspannung eingespeist wird. Durch die Erweiterung des Traktionsantriebs nach Figur 1 auf drei Antriebsmotoren kann die erfindungsgemäße Einspeiseschaltung 16 und 74 auch bei Mehrsystemlokomotiven verwendet werden, bei denen jeweils drei Wechselstrommotoren in einem Drehgestell untergebracht sind.

## Patentansprüche

1. Einspeiseschaltung (16) für eine Mehrsystemlokomotive, wobei die Einspeiseschaltung (16) einen Transformator (42) und einen ersten und zweiten Stromrichter (18,20) enthält, die jeweils mittels eines ersten und zweiten Zwischenkreiskondensators (10,12) mit einem ersten und zweiten Wechselrichter (6,8) elektrisch leitend verbunden sind, **dadurch gekennzeichnet,**
a) daß ein wechselstromseitiger Eingang (22) eines ersten Brückenzweiges (24) des ersten Stromrichters (18) über eine erste Sekundärwicklung (26) mit einem wechselstromseitigen Eingang (28) eines ersten Brückenzweiges (30) des zweiten Stromrichters (20) verbunden ist,
b) daß ein wechselstromseitiger Eingang (32) eines zweiten Brückenzweiges (34) des ersten Stromrichters (18) über eine zweite Sekundärwicklung (36) mit einem wechselstromseitigen Eingang (38) eines zweiten Brückenzweiges (40) des zweiten Stromrichters (20) verbunden ist,
c) daß eine Eingangsgleichspannung (U_{E}) an einem positiven gleichstromseitigen Anschluß (46) des zweiten und an einen negativen gleichstromseitigen Anschluß (48) des ersten Stromrichters (20,18) zufuhrbar ist und
d) daß die Stromrichterventile (V13,V14) des zweiten Brükkenzweiges (34) des ersten Stromrichters (18) und die Stromrichterventile (V21,V22) des ersten Brückenzweiges (30) des zweiten Stromrichters (20) mittels einer Steuerschaltung (52), der eingangsseitig eine Zwischenkreis-Sollspannung (U_{Ksoll}) und eine Eingangsgleichspannung (U_{E}) zugeführt sind, ansteuerbar sind, wogegen die anderen Stromrichterventile (V11,V12,V23,V24) der beiden Stromrichter (18,20) mittels einer weiteren Steuerschaltung (58) getaktet ansteuerbar sind.

2. Einspeiseschaltung nach Anspruch 1, **dadurch gekennzeichnet,** daß die Sekundärwicklungen (26,36) des Transformators (42) jeweils eine große Streuung aufweisen und daß bei Gleichspannungseinspeisung die Primärwicklung (44) überbrückbar ist.

3. Einspeiseschaltung nach Anspruch 1, **dadurch gekennzeichnet,** daß bei Wechselspannungseinspeisung der erste und zweite Stromrichter (18,20) elektrisch parallel schaltbar sind.

4. Einspeiseschaltung nach Anspruch 1, **dadurch gekennzeichnet,** daß die Steuerschaltung (52) einen Komparator (54) und einen Steuersatz (56) enthält.

## Claims

1. Power supply circuit (16) for a multi-system locomotive, wherein the power supply circuit (16) includes a transformer (42) and a first and second converter (18, 20) which are respectively electrically conductively connected by means of a first and second intermediate circuit capacitor (10, 12) to a first and second inverter (6, 8), characterised in that
a) an input (22) on the alternating current side of a first bridge branch (24) of the first converter (18) is connected via a first secondary winding (26) to an input (28) on the alternating current side of a first bridge branch (30) of the second converter (20),
b) in that an input (32) on the alternating current side of a second bridge branch (34) of the first converter (18) is connected via a second secondary winding (36) to an input (38) on the alternating current side of a second bridge branch (40) of the second converter (20),
c) in that an input direct voltage (U_{E}) can be supplied to a positive terminal (46) on the direct current side of the second converter and to a negative terminal (48) on the direct current side of the first converter (20, 18) and
d) in that the converter valves (V13, V14) of the second bridge branch (34) of the first converter (18), and the converter valves (V21, V22) of the first bridge branch (30) of the second converter (20) can be controlled by means of a control circuit (52), to which an intermediate circuit desired voltage (U_{Kdes}) and an input direct voltage (U_{E}) are supplied on the input side, but the other converter valves (V11, V12, V23, V24) of the two converters (18, 20) can be controlled in a clocked manner by means of a further control circuit (58).

2. Power supply circuit according to claim 1, characterised in that the secondary windings (26, 36) of the transformer (42) each have a large leakage, and in that when there is a direct voltage supply the primary winding (44) can be bridged.

3. Power supply circuit according to claim 1, characterised in that when there is an alternating voltage supply the first and second converters (18, 20) can be connected electrically in parallel.

4. Power supply circuit according to claim 1, characterised in that the control circuit (52) contains a comparator (54) and a control unit (56).

## Revendications

1. Circuit d'alimentation (16) pour une locomotive à systèmes multiples, le circuit d'alimentation (16) comportant un transformateur (42) et des premier et second convertisseurs statiques (18,20), qui sont raccordés de façon électriquement conductrice à des premier et second onduleurs (6,8), respectivement au moyen de premier et second condensateurs (10,12), de circuits intermédiaires, caractérisé par le fait
a) qu'une entrée (22), située côté courant alternatif, d'une première branche (24) du pont du premier convertisseur statique (18) est connectée, par l'intermédiaire d'un premier enroulement secondaire (26), à une entrée (28), située côté courant alternatif, d'une première branche (30) du pont du second convertisseur statique (20),
b) qu'une entrée (32), située côté courant alternatif, d'une seconde branche (34) du pont du premier convertisseur statique (18) est connectée, par l'intermédiaire d'un second enroulement secondaire (36), à une entrée (38), située côté courant alternatif, d'une seconde branche (40) du pont du second convertisseur statique (20),
c) qu'une tension continue d'entrée (U_{E}) peut être appliquée à une borne positive (46), située côté courant continu, du second convertisseur statique (20) et à une borne négative (48), située côté courant continu, du premier convertisseur statique (18), et
d) que les valves (V13,V14) de la seconde branche (34) du pont du premier convertisseur statique (18) et les valves (V21,V22) de la première branche (30) du second convertisseur statique (20) peuvent être commandées au moyen d'un circuit de commande (59), auquel est appliquée, côté entrée, une tension de consigne (U_{Ksoll}) du circuit intermédiaire et une tension continue d'entrée (U_{E}), tandis que les autres valves (V11,V12,V23,V24) des deux convertisseurs statiques (18,20) peuvent être commandées de façon cadencée au moyen d'un autre circuit de commande (58).

2. Circuit d'alimentation suivant la revendication 1, caractérisé par le fait que les enroulements secondaires (26,36) du transformateur (42) possèdent respectivement une dispersion élevée et que dans le cas de l'alimentation en courant continu, l'enroulement primaire (44) peut être shunté.

3. Circuit d'alimentation selon la revendication 1, caractérisé en ce que dans le cas d'une alimentation en courant alternatif, les premier et second convertisseurs statiques (7,18,20) peuvent être branchés électriquement en parallèle.

4. Circuit d'alimentation suiant la revendication 1, caractérisé par le fait que le circuit de commande (52) comporte un comparateur (54) et une unité de commande (56).
